Europäisches Patentamt

European Patent Office

Office européen des brevets

(11) Veröffentlichungsnummer: **0 351 714**
**A2**

(12) **EUROPÄISCHE PATENTANMELDUNG**

(21) Anmeldenummer: **89112802.7**

(22) Anmeldetag: **13.07.89**

(51) Int. Cl.⁴: **G01B 21/04**

(30) Priorität: **20.07.88 DE 3824549**

(43) Veröffentlichungstag der Anmeldung:
**24.01.90 Patentblatt 90/04**

(84) Benannte Vertragsstaaten:
**CH DE FR GB IT LI NL SE**

(71) Anmelder: **Firma Carl Zeiss**

**D-7920 Heidenheim (Brenz)(DE)**
(84) **CH DE FR IT LI NL SE**

Anmelder: **CARL-ZEISS-STIFTUNG trading as CARL ZEISS**

**D-7920 Heidenheim (Brenz)(DE)**
(84) **GB**

(72) Erfinder: **Enderle, Eckhard**
**Hutsteinweg 6**
**D-7080 Aalen-Dewangen(DE)**
Erfinder: **Aehnelt, Peter**
**Pulfrichstrasse 16**
**D-7082 Oberkochen(DE)**
Erfinder: **Kaufmann, Dieter**
**Kirchstrasse 37**
**D-7920 Heidenheim 5(DE)**

(54) **Lagerung für Tastköpfe.**

(57) Als Lagerung für den Taststift (6) eines Tasters (5) bzw. eine Taststift- oder Tastkopfwechselhalterung ist eine Anordnung vorgesehen, die im wesentlichen die Form eines Pyramidenstumpfes (7) besitzt. In diesem Pyramidenstumpf liegt das zu haltende Teil (5) flächig oder an sechs diskreten Berührpunkten auf. Die Berührpunkte sind in Bezug auf die Längsachse des Pyramidenstumpfes axial und radial gegeneinander versetzt.

Die Lagerung besitzt eine hohe Torsionssteifigkeit und einen relativ großen Bereich, in dem sie sich selbst zentriert.

Außerdem ist die azimutale Winkelverteilung der Kraft, die das Lager einem seitlichen Ausheben entgegensetzt, sehr gleichmäßig.

Fig.1

## Lagerung für Tastköpfe

Die in der Koordinatenmeßtechnik verwendeten mechanischen Taster vom sogenannten "schaltenden Typ" besitzen einen beweglichen Taster bzw. Taststift, der von einer Feder in ein seine Nullstellung hochgenau reproduzierendes Lager gedrängt wird. Im Moment der Berührung mit dem Werkstück wird der Taster gegen die Federkraft aus seinem Lager ausgehoben und erzeugt dann das die Antastung charakterisierende, impulsförmige Schaltsignal. Für die Lagerung des Taststiftes wird üblicherweise die in der US-PS 41 53 998 beschriebene, sogenannte "kinematische Dreipunktlagerung" verwendet, bei der drei radial abstehende zylindrische Arme in durch Kugeln oder Walzen gebildeten V-Lagern liegen. Diese Anordnung ist sehr gut reproduzierbar und ist außerdem torsionssteif gegenüber Drehungen um die Taststiftlängsachse.

Gleichartige Lagerungen werden auch zur Befestigung von auswechselbaren Taststiften an einem entsprechenden Halter am Tastkopf von Koordinatenmeßgeräten eingesetzt. Ein solcher Wechselhalter ist beispielsweise in der US-PS 46 37 119 beschrieben.

Es ist weiterhin aus der Zeitschrift "microtecnik" 2/1986 Seite 43-46 bekannt, eine solche Lagerung zur auswechselbaren Befestigung von kompletten Tastköpfen am Meßarm einer Mehrkoordinatenmeßmaschine vorzusehen.

Die beschriebenen Dreipunktlagerungen haben verschiedene Nachteile. So ist einmal der Bereich, innerhalb dessen das zu haltende Teil selbstzentrierend in sein Lager zurückkehrt, relativ klein, da dieser Bereich durch den Durchmesser der Kugelpaare der Lagerung festgelegt wird. Der Verwendung zur Lagerung des Taststifts in einem schaltenden Tastkopf steht ein weiterer Nachteil entgegen. So ist die Antastkraft, d.h. die Kraft, die der Taststift auf das zu vermessende Werkstück ausübt, richtungsabhängig. Sie ändert sich um einen Faktor zwei, je nachdem ob der Taststift beim Auslenken direkt über eine Lagerstelle kippt oder um die aus zwei Lagerstellen gebildete Verbindungslinie gekippt wird. Aufgrund dieser Winkelabhängigkeit der Antastkraft entstehen Meßfehler bei der Bestimmung der Antastkoordinaten. Entsprechende Untersuchungen sind in der Zeitschrift "Technisches Messen TM" 1979, Heft 2 auf den Seiten 47-52 und 161-169 veröffentlicht.

Aus der DE-PS 32 29 992 ist ein Tastkopf bekannt, dessen Lagerung für den Taster als Kombination von Kegelstumpf und Torus ausgebildet ist. Zwar ist die Antastkraft hier winkelunabhängig, da das Lager symmetrisch ist. Der Taststift ist jedoch nicht gegen eine Rotation um seine Taststiftlängsachse gesichert. Es ist daher nicht möglich Taststifte zu verwenden, bei denen die Tastkugeln exzentrisch, d.h. außerhalb der Taststiftachse liegen.

Aus der DE-OS 36 03 269 ist ein Tastkopf mit einer Lagerung bekannt, die so ausgebildet sein soll, daß sie gleichzeitig als Verdrehsicherung wirkt, d.h. Drehungen des Taststifts um seine Längsachse verhindert. Hierzu ist der Träger des Taststifts als Pyramidenstumpf ausgebildet und liegt zwischen drei Kugeln im feststehenden Teil des Taststiftgehäuses. Bezüglich seiner Kipplage wird der Taststift durch eine zweite, gleichartige Lagerung im hinteren Ende des zylinderförmigen Tastkopfgehäuses gesichert. Die beiden Lagerungen sind durch eine den zweigeteilten Taststiftschaft auseinanderdrückende Feder und eine Kugelführung miteinander verbunden.

Der bekannte Tastkopf hat mehrere Nachteile. Er ist zum einen relativ aufwendig gebaut und außerdem geht die Qualität der Kugelführung in die Genauigkeit der Lagerung des Taststiftes mit ein. Zudem ist die Torsionssteifigkeit des Taststiftes nicht sonderlich hoch, da der pyramidenstumpfartige Teil des Taststiftes die Kugeln der Lagerung mit seinen Flächen mittig berührt, d.h. an einer Stelle, wo die gegen eine Torsion gerichteten Rückstellkräfte sehr klein sind.

Es ist die Aufgabe der vorliegenden Erfindung, eine Lagerung für einen Tastkopf an einem Koordinatenmeßgerät, einen Taster in einem Tastkopf oder ein auswechselbares Tastelement an einem Tastkopf zu schaffen, die möglichst einfach aufgebaut und torsionssteif ist und sich in einem möglichst großen Bereich selbst zentriert.

Ausgehend von einer Lagerung gemäß dem Oberbegriff des Anspruches 1 wird diese Aufgabe durch die im Kennzeichen dieses Anspruches angegebenen Maßnahmen dadurch gelöst, daß das gehaltene Teil an mindestens sechs in Bezug auf die Längsachse des Pyramidenstumpfes axial und radial zueinander versetzten Stellen in der Lagerung aufliegt.

Neben den vorstehend aufgabenhaft formulierten Vorteilen ist hervorzuheben, daß ein Tastkopf, dessen Taster eine derartige Lagerung besitzt, nahezu keine Winkelabhängigkeit der Antastkraft zeigt. Da gemäß der Erfindung punktförmige oder flächige Auflagestellen mit verhältnismäßig großen Gegenflächen zusammenwirken, ist das selbstzentrierende Verhalten der Lagerung in einem sehr großen Bereich sichergestellt.

Verglichen mit dem in der DE 36 03 269 beschriebenen Tastkopf besitzt ein gemäß der Erfindung ausgebildeter Tastkopf einen bedeutend einfacheren Aufbau. Denn da der in seiner Lagerung gehaltene Körper an mindestens sechs Stellen gleichzeitig in seinem Lager aufliegt, kann auf ein zweites, axial versetztes Gegenlager verzichtet werden. Da die Auflagestellen gegeneinander versetzt sind und außerhalb der Mittellinien der Flächen des Pyramidenstumpfes liegen, ist die Lagerung sehr torsionssteif.

Es ist zweckmäßig die Halterung so auszubilden, daß das gehaltene Teil an sechs diskreten Auflagepunkten in der Halterung liegt. Die Lage des gehaltenen Teils ist dann kinematisch eindeutig bestimmt und außerdem ist die Lagerreibung infolge der punktförmigen Auflagestellen minimiert, so daß die Reproduzierbarkeit der Nullage des gehaltenen Teils sehr gut ist. Diese Vorteile lassen sich jedoch auch bei einer flächigen Auflage erreichen, wenn die Auflage beispielsweise durch reibungsfreie Luft- oder Fluidlager gebildet ist. Weiterhin sind auch linienförmige Auflagebereiche geeignet, die beispielsweise durch Schneiden oder Walzen realisiert werden können.

Zur Verminderung der Reibung und der Erhöhung der Lagergenauigkeit ist es weiterhin zweckmäßig, wenn die Auflagestellen bzw. Berührpunkte der Lagerung durch Einsätze eines im Vergleich zum Grundkörper der Lagerung bzw. des gehaltenen Teils hartem Material gebildet sind.

Wählt man als diskrete Auflagepunkte Kugeln, dann können diese zur weiteren Reduzierung der Reibung drehbeweglich in einem Kugelkäfig gehalten sein. Es ist dann allerdings zweckmäßig, die Flächen und Gegenflächen zwischen denen die Kugeln liegen, so genau zu fertigen, daß eine Verlagerung der Kugeln und damit der Auflagepunkte keine Lageunsicherheit des gehaltenen Teils zur Folge hat.

In Bezug auf die Torsionssteifigkeit des gehaltenen Teils ist es besonders vorteilhaft, wenn der Pyramidenstumpf der Lagerung die Form einer dreiseitigen Pyramide besitzt. Ein dreiseitiger Pyramidenstumpf erlaubt es, die Auflagepunkte symmetrisch anzuordnen, so daß jeder der drei Flächen des Pyramidenstumpfes jeweils zwei Auflagepunkte zugeordnet sind. In einer derartigen Anordnung ist auch die Kraft, die die Lagerung einer Auslenkbewegung in der Ebene senkrecht zur Taststiftlangsachse entgegensetzt, sehr gleichmäßig.

Wenn im Vorhergehenden von einem Pyramidenstumpf die Rede war, so ist klar, daß damit die Anordnung der Lagerpunkte im Raum gemeint ist. Zwar können die beiden Teile der Lagerung selbst, d. h. der Lagersitz im feststehenden Teil und der darin aufgenommene Körper des zu haltenden Teils beide die Form einer positiven bzw. negativen Pyramide besitzen. Dies ist jedoch nicht unbedingt erforderlich. So genügt es immer, wenn nur eines der beiden Teile, entweder die Lagerung oder das darin gehaltene Teil die Form des Pyramidenstumpfes besitzt, je nachdem welches die flächige Auflage darstellt, und die Auflagepunkte an dem jeweils anderen Teil sinnvoll miteinander verbunden sind. Außerdem brauchen die Lagerflächen nur im Bereich der Auflagepunkte Teile der Pyramide darzustellen. Der übrige Teil kann durch eine andere Formgebung ersetzt werden, wobei sicherzustellen ist, daß diese Formgebung die Selbstzentrierung des gehaltenen Teiles nicht behindert.

So können beispielsweise die Ecken des Pyramidenstumpfes teilweise gerundet sein, wodurch bezogen durch einen bestimmten Außendurchmesser der Lagerung die Lagerbasis, d.h. der Abstand zwischen den Lagerpunkten vergrößert werden kann.

Weitere Vorteile ergeben sich aus der nachfolgenden Beschreibung von Ausführungsbeispielen anhand der Figuren 1-10 der beigefügten Zeichnungen.

Figur 1 ist eine Prinzipskizze eines mit der erfindungsgemäßen Lagerung versehenen Tastkopfes in einer die Tasterlängsachse enthaltenden Ebene;

Figur 2 zeigt den Taster aus Figur 1 im Schnitt entlang der Linie II-II in Figur 1;

Figur 3a ist eine perspektivische Prinzipskizze des beweglichen Tasters (5/6) aus Figur 1 bzw. Figur 2;

Figur 3b zeigt den Taster (5/6) aus Figur 3a in einer leicht veränderten Ausführungsform;

Figur 3c zeigt den Taster (5/6) aus Figur 3a in einer bezüglich der Anordnung der Auflagepunkte leicht modifizierten Ausführungsform;

Figur 4a und 4b sind Schnittzeichnungen, die im vergrößerten Maßstabe und 4b jeweils einen der Auflagepunkte des Tasters aus Figur 1 bzw. Figur 2 zeigen;

Figur 5 ist ein weiteres, gegenüber Figur 3a modifiziertes Ausführungsbeispiel für den Taster (5/6);

Figur 6 ist die Prinzipskizze eines weiteren Ausführungsbeispiels, die einen Tastkopf im Schnitt entlang der Taststiftmittelachse darstellt;

Figur 7 ist eine Schnittzeichnung eines Ausführungsbeispiels der erfindungsgemäßen Lagerung für die auswechselbare Befestigung zweier Teile aneinander;

Figur 8 ist eine Schnittzeichnung eines gegenüber Figur 7 hinsichtlich der Ausbildung der Lagerpunkte leicht modifizierten Ausführungsbeispiels;

Figur 9 zeigt die Lagerpunkte des Ausführungsbeispiels aus Figur 8 in vergrößertem Maßstab;

Figur 10 ist eine perspektivische Darstellung eines gegenüber Figur 3a modifizierten weiteren Ausführungsbeispiels für den Taster (5/6).

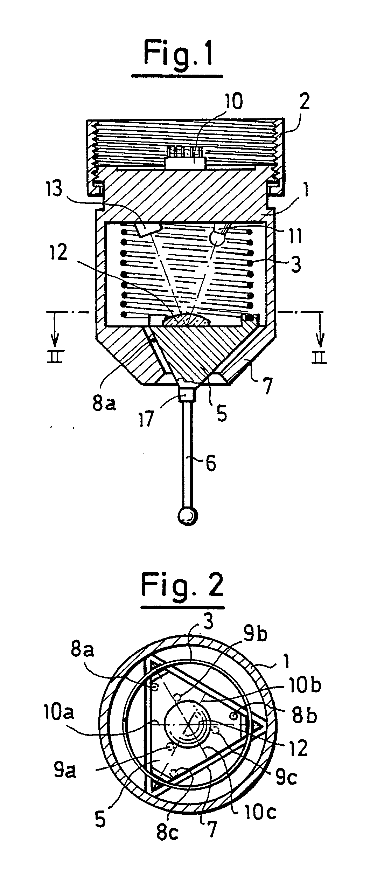

Der in Figur 1 dargestellte Tastkopf besitzt ein zylindrisches Gehäuse (1), das mit Hilfe einer Überwurfmutter (2) direkt oder über ein Verlängerungsstück am Meßarm eines Koordinatenmeßgerätes befestigt werden kann. Stirnseitig ist das Gehäuse (1) mit einer Steckerbuchse (10) versehen, auf dessen Kontaktstifte die verschiedenen elektrischen Anschlüsse des Tastkopfes gelegt sind.

Am entgegengesetzten Ende verjüngt sich das Gehäuse (1) konisch. Dort geht das Gehäuse in ein Lagerteil (7) über, das den Träger (5) für den beweglichen Taststift (6) des Tastkopfes aufnimmt. Das in der Lagerung (7) gehaltene Teil (5) wird durch eine Feder (3) in seine Nullage gedrängt. Zur Erkennung des Antastvorganges ist zwischen die Teile (5 und 6) ein piezoelektrischer Sensor (17) geschaltet. Dieser liefert im Moment der Berührung des Taststift (6) mit dem Werkstück ein Signal. Die Arbeitsweise eines solchen Sensors ist ausführlich in der US-PS 41 77 568 beschrieben und wird an dieser Stelle deshalb nicht wiederholt.

Zur Erkennung der Nullage des Taststift (6) sind eine Leuchtdiode (11) und eine Vierquadrantendiode (13) am feststehenden Gehäuse (1) sowie eine Spiegellinse (12) auf der Oberseite des Teils (5) vorgesehen. Letztere bildet die Leuchtfläche der Leuchtdiode (11) auf die Quadrantendiode (13) ab. Das Signal dieser Einrichtung dient dazu, das im Zuge eines Antastvorganges entstehende, erste Signal des piezoelektrischen Sensors (17) zu verifizieren. Die Elektronik, in der die beiden Signale des Tasters verarbeitet werden, ist mit (14) bezeichnet. Auch eine solche Einrichtung ist bereits aus der vorstehend genannten US-PS 41 77 568 bekannt und wird deshalb an dieser Stelle nicht beschrieben.

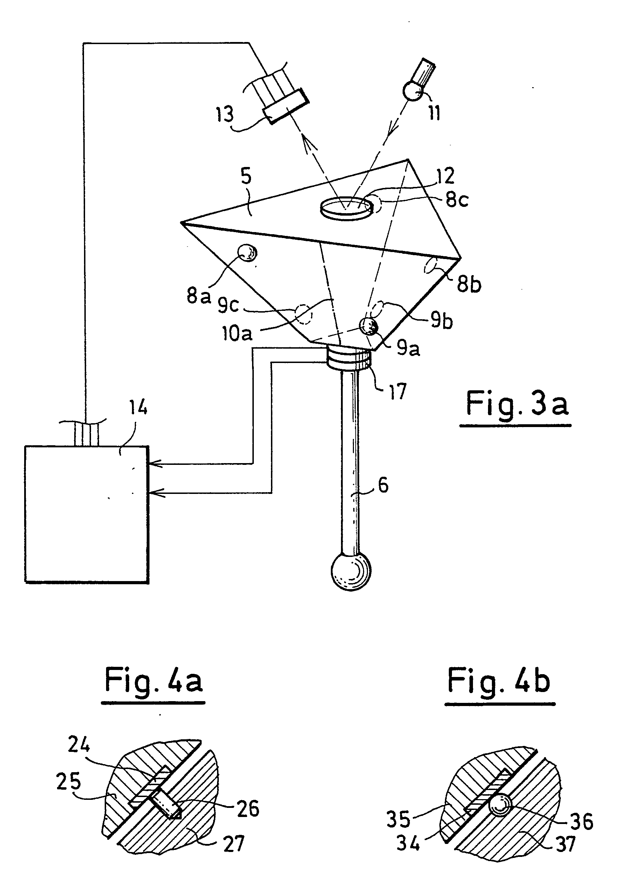

Wie aus der Schnittzeichnung nach Figur 2 und der perspektivischen Darstellung in Figur 3a hervorgeht besitzt der Träger (5) des Taststifts (6) die Form eines dreiseitigen Pyramidenstumpfes, der an sechs diskreten Auflagepunkten auf entsprechend geformten Gegenflächen der Lagerung (7) am unteren Teil des Gehäuses (1) aufliegt. Die Auflagepunkte bilden konvexe Erhebungen an dem Teil (5). Sie sind in den Figuren 2 und 3a mit (9a-c) und (8a-c) bezeichnet.

In diesem Ausführungsbeispiel sind jeder der drei Flächen des Pyramidenstumpfes zwei Auflagepunkte zugeordnet. Diese Punkte paare (8a/9a), (8b/9b) und (8a/9c) liegen außerhalb der in Figur 2 und 3a mit (10a,b und c) bezeichneten Mittellinien der Flächen des Pyramidenstumpfes, und zwar sind jeweils die drei Auflagepunkte (8a-c) an der breiteren Basis des Pyramidenstumpfes links, und die axial in Richtung auf die Pyramidenspitze versetzt angeordneten drei verbleibenden Auflagepunkte (9a-c) rechts der jeweiligen Mittellinie (10a,b,c) angeordnet. Diese radiale Versetzung der Auflagepunkte stellt die Torsionssteifigkeit der dadurch gebildeten Lagerung sicher.

Die Auflagepunkte (8) bzw. (9) können natürlich direkt als sphärische bzw. zylindrische Erhebungen entweder an das Teil (5) oder die Innenseite des Lagerteils (7) ausgearbeitet werden. Im Hinblick auf ein gutes Verschleißverhalten und geringe Reibung werden jedoch zweckmäßig die in Figur 4a und 4b für diese Auflagepunkte skizzierten Ausführungsformen gewählt. Dort sind jeweils in das aus relativ weichem Material wie z.B. Aluminium bestehende Teil (25) bzw. (35) des Lagerkörpers flächige Einsätze (24) bzw. (34) aus Hartmetall eingesetzt. Der eigentliche Auflagepunkt wird dann durch einen in die jeweilige Gegenfläche (27) und (37) der Lagerung eingesetzten Hartmetallstift (26) bzw. eine Kugel (36) gebildet, deren Stirnseite bzw. Oberfläche poliert ist.

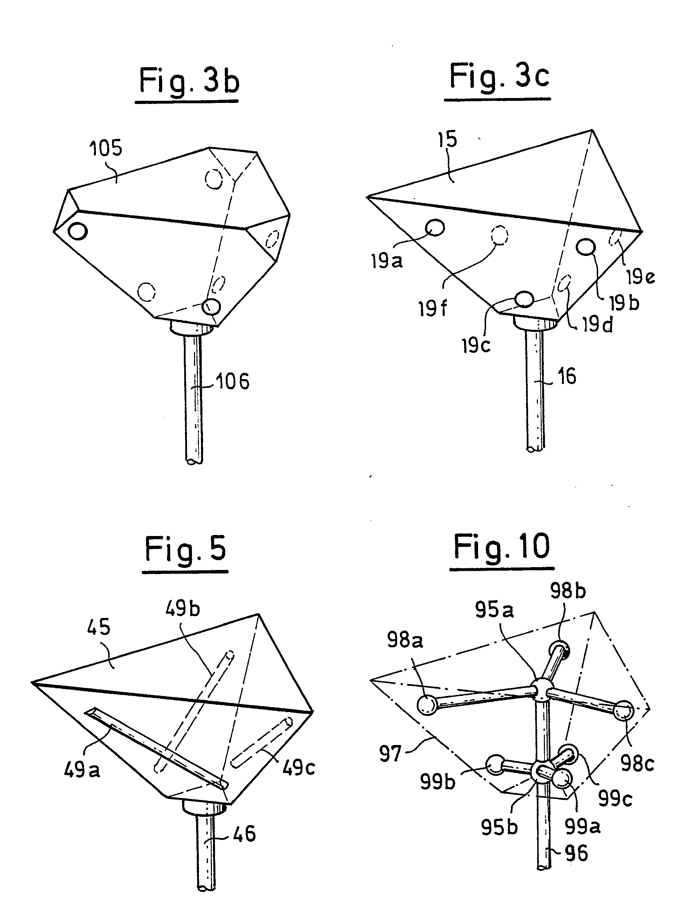

Die Genauigkeit der Lagerung hängt unter anderem von der Lagerbasis ab, d.h. dem radialen Abstand der Lagerpunkte von der Symmetrieachse des Pyramidenstumpfes. Bei gegebenem Außendurchmesser des Tastkopfes kann diese Lagerbasis dadurch vergrößert werden, daß die Ecken des Pyramidenstumpfes abgeschrägt werden. Ein entsprechendes Ausführungsbeispiel ist in Figur 3b dargestellt.

Ein weiteres bezüglich der Anordnung der Auflagepunkte alternatives Ausführungsbeispiel ist in Figur 3c dargestellt. Dort sind einer Fläche drei Auflagepunkte (19a,b und c) zugeordnet, der zweiten Fläche sind die beiden Auflagepunkte (19d und e) zugeordnet, während die dritte Fläche nur auf einem Auflagepunkt (19f) in der jeweiligen Lagerung im Tastkopf ruht. Auch hier sind wieder mehrere, nämlich vier der Auflagepunkte außerhalb der Mittellinien der Flächen des Pyramidenstumpfes angeordnet, um die Torsionssteifigkeit der Lagerung zu gewährleisten.

Im Ausführungsbeispiel für den Taster nach Figur 5 sind keine diskreten Auflagepunkte vorgesehen, sondern linienförmige Auflagebereiche realisiert, indem in jede der drei Flächen des als Pyramidenstumpf ausgebildeten Halters (45) für den Taststift (46) jeweils eine Walze (49a,b,c) auf Hartmetall eingebettet ist. Auch hier sind die Walzen (49a-c) schräg in Bezug auf die Mittellinien der Flächen des Pyramidenstumpfes angeordnet und schneiden diese Mittellinien, um die Verdrehsicherheit der Lagerung zu gewährleisten.

Das Ausführungsbeispiel nach Figur 10 verdeutlicht, daß das zu haltende Teil nicht selbst die Form einer Pyramide bzw. eines Pyramidenstumpfes besitzen muß. Hier sind an der Taststiftachse (96) an zwei axial versetzten Stellen (95a und 95b) jeweils drei im Winkel von 120° zueinander radial abstehende Arme angebracht, die an ihrem äußeren Ende Kugeln (89a-c) und (99ac) tragen. Diese Kugeln sind räumlich so angeordnet, daß sie auf der Innenfläche eines Pyramidenstumpfes einer dreiseitigen Pyramide liegen. Da das obere und das untere Kugeltripel um die Taststiftlängsachse gegeneinander verdreht sind, ergibt sich wieder die im Prinzip aus Figur 1/2 bekannte torsionssteife Anordnung des Taststifts (96) in einem aus einem negativen Pyramidenstumpf gebildeten Lager.

Versuche haben ergeben, daß die Lagerereproduzierbarkeit des Taststiftes besonders gut ist, wenn für den Winkel, unter dem die Flächen des Pyramidenstumpfes aneinandergrenzen, Werte zwischen 70° und 110° gewählt werden.

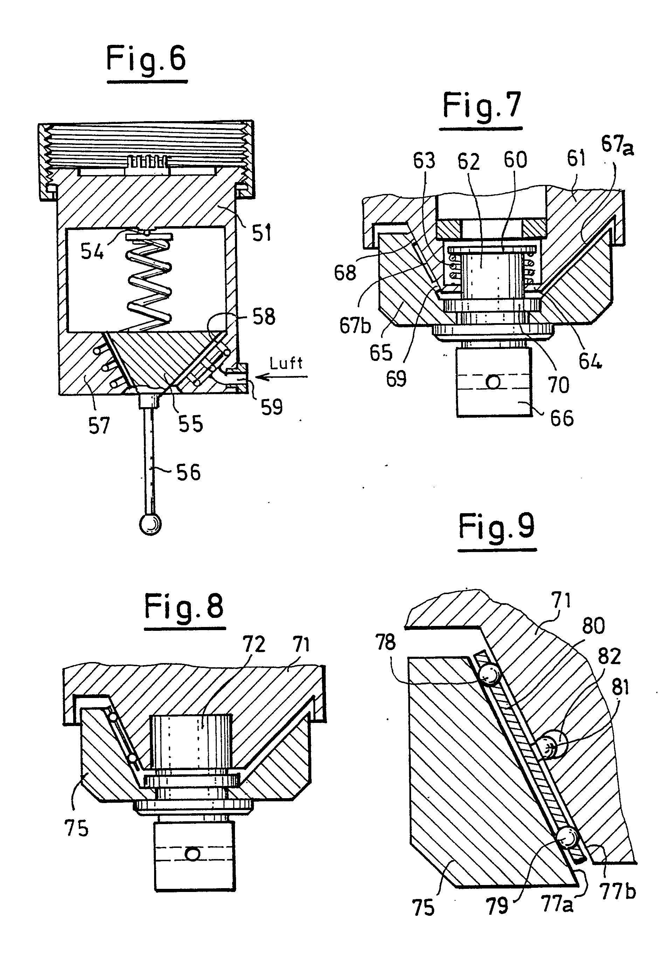

Bei dem in Figur 6 dargestellten Tastkopf ist abweichend von den vorstehend beschriebenen Ausführungsbeispielen statt einer punkt- bzw. linienförmigen Auflage eine flächige Auflage zwischen dem pyramidenstumpfförmigen Träger (55) des Taststiftes (56) und dem innen mit entsprechenden Gegenflächen versehenen Lagerteil (57) am Gehäuse (51) des Tastkopfes vorgesehen.

Um die Reibung zwischen den aufeinanderliegenden Flächen auszuschalten, die ein reproduzierbares Zurückkehren des Taststift (56) in seine Nullage verhindern würde, sind die pyramidenstumpfförmigen Innenflächen des Lagerteils (57) als Luftlager ausgebildet. Dies bedeutet keinen sonderlich hohen Aufwand, da Koordinatenmeßgeräte meist ohnehin auf Luftlagern geführt sind und sich somit ein entsprechender Druckluft-Anschluß an die Einlaßöffnung (59) am Tastkopf (51) leicht herstellen läßt. Der Träger (55) für den Taststift (56) liegt in diesem Falle auf einem ca. 2 Mikrometer dicken Luftpolster (58) auf und kehrt somit reibungsfrei immer wieder in die durch seine Lagerung (57) bestimmte Nullage zurück.

In den vorstehend beschriebenen Ausführungsbeispielen sind jeweils Tastköpfe dargestellt, in denen der auslenkbare bzw. nachgiebige Taster mit der erfindungsgemäßen Lagerung versehen ist. In Figur 7 nun ist das Ausführungsbeispiel einer Wechselhalterung dargestellt, wie sie z.B. zum automatisch gesteuerten Einwechseln von unterschiedlichen Taststiften an Tastköpfe bzw. kompletten Tastköpfen unterschiedlichen Typs an Meßmaschinen verwendet werden kann. In der Figur 7 ist das "feststehende" Aufnahmeteil mit (61) bezeichnet. Dieses Aufnahmeteil (61) besitzt an seiner Unterseite die Form eines dreiseitigen Pyramidenstumpfes, wobei die in der Schnittdarstellung ersichtlichen Flächen mit (67a) und (67b) bezeichnet sind. In diesem Aufnahmeteil (61) ist außerdem ein kombinierter Permanent/Elektromagnet (62) gegen die Kraft einer Feder (63) axial in Richtung auf die Pyramidenspitze verschieblich eingebaut. Dieser Magnet (62) zieht eine Ankerplatte (70) in dem zu haltenden Teil (65) an und damit dieses innen als negativer Pyramidenstumpf ausgebildete Teil gegen die Flächen (67a-c) der Lagerung.

Die Funktion der elektro-magnetischen Spanneinrichtung braucht an dieser Stelle nicht beschrieben werden, da sie im Prinzip in gleicher Weise wie die in der eingangs genannten US-PS 46 37 119 beschriebene Spanneinrichtung arbeitet.

Der zu haltende Wechselteller (65) ist mit sechs diskreten Auflagepunkten an seinen Gegenflächen versehen, wobei diese Auflagepunkte beispielsweise die in den Figuren 3a oder 3c skizzierte, räumliche Anordnung bezüglich der Flächen des Pyramidenstumpfes besitzen können. An seiner Unterseite trägt der Wechselteller (65) einen Montagewürfel (66), an dem dann, wenn es sich um eine Wechseleinrichtung für Taststifte handelt, mehrere Taststifte in unterschiedlicher Ausrichtung angeschraubt sein können. Bei entsprechend großer Dimensionierung können an dem Wechselteller (65) jedoch auch komplette Tastköpfe angesetzt werden, wobei hier nicht allein mechanische Tastköpfe sondern auch optische Tastköpfe wie z.B. sogenannte Triangulationstaster angesetzt werden können.

In Figur 8 und 9 ist der gleiche Wechselhalter nochmals in einer leicht modifizierten Ausführungsform dargestellt. Der feststehende Träger ist hier mit (71) bezeichnet und der Magnet mit (72). Abweichend zu Figur 7 sind die Auflagepunkte durch rollbeweglich gehaltene Kugeln realisiert, die zwischen den drei Flächen des Pyramidenstumpfes am Halteteil (71) und am Wechselteller (75) liegen. Wie aus der vergrößerten Darstellung nach Figur 9 hervorgeht liegen die Kugeln (78) und (79) zwischen den Flächen (77b) und (77a) in einem Kugelkäfig (80) aus z.B. Plastik, der in Cliptechnik mit seiner knopfartigen Verdickung (81) in eine entsprechende Nut (82) im Teil (71) eingedrückt ist. Der Kugelkäfig (80) besitzt ebenfalls die Form eines Pyramidenstumpfes und nimmt alle sechs Kugeln der Lagerung auf. Er ist an mehreren Stellen an dem Teil (71) befestigt.

In den vorstehenden Ausführungsbeispielen wurde stets ein dreiseitiger Pyramidenstumpf beschrieben. Es ist jedoch klar, daß die Lagerung auch die Form eines vierseitigen Pyramidenstumpfes besitzen kann.

Außerdem müssen die Auflagepunkte nicht notwendigerweise an dem gehaltenen Teil vorstehend angearbeitet werden, sie können auch in die Lagerung oder teilweise in der Lagerung und teilweise am gehaltenen Teil angebracht werden.

**Ansprüche**

1. Lagerung für einen mechanischen oder optischen Tastkopf an einem Koordinatenmeßgerät, einen nachgiebigen Taster in einem Tastkopf oder ein auswechselbares Tastelement am Taster eines Tastkopfes, wobei das zu lagernde Teil durch eine Kraft in eine definierte Nullage gedrängt wird und die Lagerung bzw. das in der Lagerung gehaltene Teil im wesentlichen die Form eines Pyramidenstumpfes besitzt, dadurch gekennzeichnet, daß das gehaltene Teil an mindestens sechs in Bezug auf die Längsachse des Pyramidenstumpfes (5,7;55,57;65,67) axial und radial zueinander versetzten Stellen in der Lagerung aufliegt.

2. Lagerung nach Anspruch 1, dadurch gekennzeichnet, daß das gehaltene Teil (5,15,25,35,65,75,105) an sechs diskreten Auflagepunkten in der Lagerung liegt.

3. Lagerung nach Anspruch 2, dadurch gekennzeichnet, daß mindestens einige der Auflagepunkte (8a-c,9a-c) außerhalb der Mittellinien (10a-c) der Flächen des Pyramidenstumpfes (5,7) angeordnet sind.

4. Lagerung nach Anspruch 3, dadurch gekennzeichnet, daß der Pyramidenstumpf (5) der einer dreiseitigen Pyramide ist und jeder der drei Flächen jeweils zwei Auflagepunkte (8a/9a, 8b/9b, 8c/9c) zugeordnet sind.

5. Lagerung nach Anspruch 3, dadurch gekennzeichnet, daß der Pyramidenstumpf (15) der einer dreiseitigen Pyramide ist und einer der drei Flächen drei Auflagepunkte (19a-c), der zweiten Fläche zwei Auflagepunkte (19d,e) und der dritten Fläche ein Auflagepunkt (19f) zugeordnet sind.

6. Lagerung nach Anspruch 1, dadurch gekennzeichnet, daß das gehaltene Teil (45) an mindestens drei Berührlinien (49a-c) in der Lagerung liegt.

7. Lagerung nach Anspruch 2 oder 6, dadurch gekennzeichnet, daß die Auflagestellen durch Einsätze (24/26;34/36) eines im Vergleich zum Grundkörper der Lagerung (27;37) bzw. des gehaltenen Teils (25;35) harten Material gebildet sind.

8. Lagerung nach Anspruch 1, dadurch gekennzeichnet, daß das gehaltene Teil (55) flächig in der Lagerung (57) liegt.

9. Lagerung nach Anspruch 8, dadurch gekennzeichnet, daß die flächige Auflage durch Luftlager (58) oder Fluidlager gebildet ist.

10. Lagerung nach Anspruch 1, dadurch gekennzeichnet, daß das gehaltene Teil als Pyramidenstumpf (105) ausgebildet ist und die Ecken des Pyramidenstumpfes teilweise abgeschrägt sind.

11. Lagerung nach Anspruch 2, dadurch gekennzeichnet, daß die Auflagepunkte durch drehbewegliche, in einem Kugelkäfig (80) gehaltene Kugeln (78/79) gebildet sind.

## Fig.1

## Fig. 2

Fig. 3a

Fig. 4a

Fig. 4b

# Fig. 3b

105

106

# Fig. 3c

15

19a

19f

19c

19e

19b

19d

16

# Fig. 5

45

49b

49a

49c

46

# Fig. 10

98b

95a

98a

97

99b

95b

99a

99c

98c

96

## Fig.6

## Fig.7

## Fig.8

## Fig.9